Europäisches Patentamt

European Patent Office

Office européen des brevets

(11) Publication number: **0 228 278**
**A2**

(12) # EUROPEAN PATENT APPLICATION

(21) Application number: **86310062.4**

(22) Date of filing: **23.12.86**

(51) Int. Cl.⁴: **H 01 R 23/70**
**H 01 R 13/648**

(30) Priority: **27.12.85 JP 201864/85**

(43) Date of publication of application:
**08.07.87 Bulletin 87/28**

(84) Designated Contracting States:
**AT BE CH DE ES FR GB IT LI LU NL SE**

(71) Applicant: **E.I. DU PONT DE NEMOURS AND COMPANY**
**1007 Market Street**
**Wilmington Delaware 19898 (US)**

(72) Inventor: **Sakamoto, Haruo**
**3-9-7, Tamagawagakuen**
**Machida-shi Tokyo (JP)**

**Hiyama, Naoki**
**2-37-9, Kamimeguro**
**Meguro-ku Tokyo (JP)**

(74) Representative: **Barnard, Eric Edward et al**
**BROOKES & MARTIN High Holborn House 52/54 High**
**Holborn**
**London WC1V 6SE (GB)**

(54) **Electrical connector assembly.**

(57) A connector assembly has a first component (10) with a flat box-like casing (11) for mounting to a printed circuit board. Terminals (13) on the casing (11) connect with tracks on the printed circuit board. The terminals (13) have pins (13a) inside the casing (11) which are presented to an opening (12) into which a second component (20) with a flat box-like casing (21) is plugged. The second component (20) incorporates a semiconductor circuit in the form of an IC package which connects with terminals (23) in its casing (21) which mate with the pins (13a). A grounding terminal (15) made of a resilient electroconductive metal strip is mounted on the casing (11) of the first component and exposed inside the casing (11) to contact the casing (21) of the second component prior to the mating of the terminals (13, 23) to ensure that any static electricity which has developed in the casing (21) of the second component is reliably discharged.

F I G. 3

F I G. 4

EP 0 228 278 A2

**Description**

ELECTRICAL CONNECTOR ASSEMBLY

FIELD OF THE INVENTION

This invention relates to an electrical connector assembly of the type which has one connector component mounted to a printed circuit board and another connector component which incorporates a semiconductor circuit or IC package which is inserted into the first component. In this way the semiconductor circuit or IC package can be electrically connected to a circuit on the printed circuit board or disengaged.

BACKGROUND OF THE INVENTION

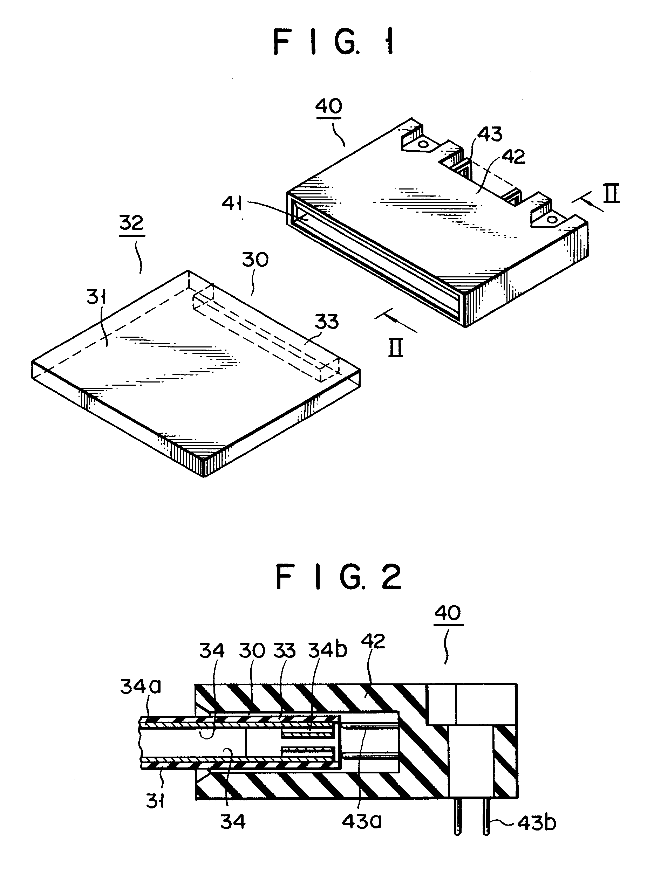

In one known form of connector assembly, illustrated in Figs. 1 and 2 of the accompanying drawings and described in more detail hereinafter, the first component mounted to the printed circuit board has a casing with an opening for receiving the other component carrying or otherwise incorporating the IC package. Complementary terminals in the casings of the components make connection whereby to connect the IC package to a circuit on the printed circuit boad. In this known construction there is a danger that the semiconductor circuit could be destroyed by electrostatic discharge and it is an object of the invention to provide an improved connector assembly which precludes the semiconductor circuit from suffering adverse effects due to such a phenomenon.

SUMMARY OF THE INVENTION

According to the invention a connection assembly comprises:

a first component having a casing with an opening; a second component adapted to be inserted into the opening of the casing of the first component and incorporating a semiconductor circuit as an IC package and respective terminals of the components disposed at least partially within the casings thereof for establishing connection between the IC package and means exterior to the first component. In accordance with the invention at least one grounding terminal is mounted to the casing of the first component to contact the casing of the second component when the components are brought together to provide a grounding path for electrostatic charge.

The casing of the first component would normally be mounted to a printed circuit board and a screw can penetrate the grounding terminal to clamp the casing to the printed circuit board and provide a good grounding connection thereto.

The grounding terminal is preferably a conductive resilient metal strip which contacts the casing of the second component before the terminals interconnect thereby to discharge any static electricity developed on the casing prior to connection of the IC package.

The invention may be understood more readily, and various other features of the invention become more apparent from consideration of the following description:-

BRIEF DESCRIPTION OF THE DRAWINGS

In the accompanying drawings:

Fig. 1 is a perspective view of a conventional connector assembly with the connector components thereof separated;

Fig. 2 is a cross-sectional view, taken along line II-II in Fig. 1, showing the conventional connector assembly with the components in a partially-inserted state;

Fig. 3 is a perspective view of a connector assembly constructed in accordance with the invention; and

Fig. 4 is a cross-sectional view, taken along line IV-IV in Fig. 3, showing the connector assembly with the components in a partially inserted state.

Figs. 1 and 2 show a conventional connector assembly suitable for interconnecting a semiconductor circuit, such as a memory, CPU and the like in the form of a card-like, flat IC package to another circuit usually on a printed circuit board. The connector assembly comprises a component 30 incorporating an IC package not shown but notionally referenced 32 and a component 40 mounted to a printed circuit board (not shown).

The connector component 30 has a sheet-like housing 31 with a recessed portion 33 containing connection terminals 34. Each terminal 34 is attached to the inner surface of the housing 31 and inner ends 34a of the terminals 34 extend into the housing 31 for connection to the semiconductor circuit 32. The terminals 34 have socket portions 34b formed at their other ends which open from the recessed portion 33 for access.

The component 40 is composed of a casing 42 having an opening 41 into which the component 30 with the IC package 32 is inserted. Connection terminals 43 are arranged at an end portion of the casing 42 remote from the opening 41. The terminals 43 have pins 43b for connection with the printed circuit board. One end 43a of each connection terminal 43 extends into the interior of the casing 42, and is also shaped as a pin for insertion into the socket portion 34b of a corresponding one of the connection terminals 34 of the component as shown in Fig. 2.

With the connector component 40 mounted on the printed circuit board and its terminals 43 connected therewith the component 30 with the IC package 32 can be inserted into the opening 41 to establish connection between the IC package 32 and the printed circuit board via the connection terminals 34 and 43. If the connector component 30 carries an electrostatic charge, the semiconductor can be destroyed.

DESCRIPTION OF THE PREFERRED EMBODIMENTS

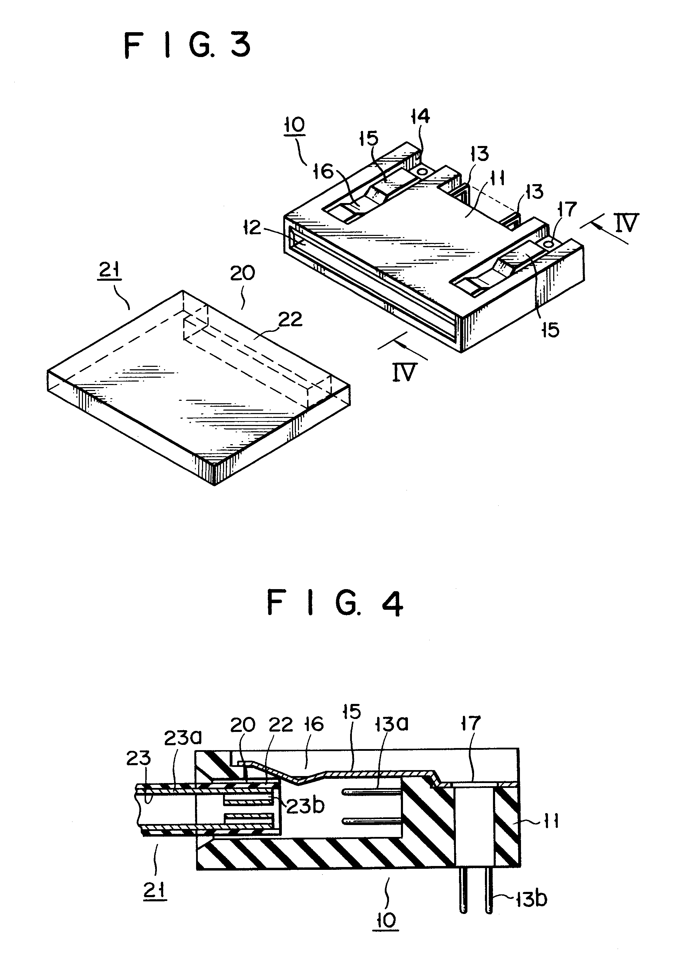

A connector assembly representing one embodiment of the invention will now be described with reference to Figs. 3 and 4 of the accompanying drawings which are generally similar to Figs. 1 and 2.

As shown in Figs. 3 and 4, the connector assembly again is composed of a connector component 10 which is attached to a printed circuit board, and a connector component 20 incorporating an IC package. The connector component 20 has a casing 21 with a recessed portion 22 containing terminals 23 with socket portions 23b connected to the IC package via portions 23a.

The connector component 10 has a casing 11 with an opening 12 for receiving the casing 21. Terminals 13 mounted on the casing 11 to the rear of the opening 12 have pins 13a projecting within the opening 12 which are engageable with the socket portions 23b and further depending pins 13b for connection with the tracks on the printed circuit board.

Recesses in the form of slots 14 are formed in the top surface of the casing 11 near the side walls or edges of the casing 11. A grounding terminal 15 is seated in each slot 14 and each terminal 15 is made from a conductive, resilient metal. As shown in Fig. 4, the slots 14 penetrate into the opening 12 and the grounding terminals 15 have shaped end regions 16 disposed further from the rear end of the casing 11 than the pins 13a. Thus, when the casing 21 with the IC package is inserted into the connector component 10 through the opening 12, the casing 21 initially contacts the curved or bent regions 16 of the grounding terminals 15, as shown in Fig. 4. The terminals 15 are then deflected upwardly as the casing 21 is fully inserted to engage the sockets 23b with the pins 13a. Holes 17 are formed in the rear end portions of the grounding terminals 15 remote from extension 16 which align with bores in the casing 21. Screws can be located through the holes and bores to fix the component 10 to the printed circuit board and establish a good grounding path. In contrast to Figs. 1 and 2, if the IC package and the connector casing 21 are in an electrically charged state, discharge is reliably effected through the grounding terminals 15. Therefore, no static electricity problems occur upon making contact between the connection terminals 23 and 13. Moreover, the casing 21, when fully inserted into the casing 11 is resiliently retained by the bent or curved portions 16 of the grounding terminals 15. The constant contact between the terminals 15 and the casing 21 also precludes any further build-up of static electricity. As a result, there is no risk that the semiconductor circuit can be destroyed by electrostatic discharge.

The grounding terminals 15 are simple in structure and easy to attach to the casing 11. Also, since the grounding terminals 15 are mounted in proximity to the side edges of the casing 11, that is, at the zones where the connection terminals 13 are not located no further modification of the casing 11 is needed.

Although two grounding terminals 15 are preferred in the embodiment just described it is possible to use a single grounding terminal.

## Claims

1. A connector assembly comprising:
a first component (10) having a casing (11) with an opening (12);
a second component (20) adapted to be inserted into the opening of the casing of the first component and incorporating a semiconductor circuit as an IC package, and respective terminals (23, 13) of the components (10, 20) disposed at least partially within the casings (11, 21) thereof for establishing connection between the IC package and the exterior of the first component (10);
characterised by at least one grounding terminal (15) mounted to the casing (11) of the first component (10) to contact the casing (21) of the secured component (20) when the components are brought together to provide a grounding path for electrostatic charge.

2. A connector assembly according to claim 1, wherein the casing (11) of the first component (10) has a rectangular box-like configuration and a recess or slot (14) is formed in a surface of said casing (11) to accommodate said at least one grounding terminal (15)

3. A connector assembly according to claim 1 or 2, wherein said at least one grounding terminal (15) is exposed within the interior of the casing (11) of the first component (10).

4. A connector assembly according to any one of claims 1 to 3, wherein terminals (13) of the first component (10) have pins (13a) within the casing (11) of the first component facing the opening (12) and said at least one grounding terminal (15) projects nearer to the opening than the pins so as to contact the casing (21) of the second component (20) before the pins (13a) contact the terminals (23) of the second component (20).

5. A connector assembly according to claim 4, wherein the terminals (23) of the second component (20) have socket portions (23b) for mating with the pins (13a) of the first component (10).

6. A connector assembly according to any one of the preceding claims wherein said at least one grounding terminal (15) is made from a strip of resilient conductive metal and has a curved or bent region (16) for contacting the casing (21) of the second component (20).

7. A connector assembly according to any one of the preceding claims, wherein said first component (10) is mounted to a printed circuit board and its terminals (13) also connect with tracks on the printed circuit board.

8. A connector according to claim 6, wherein said at least one grounding terminal (15) and the casing (11) of the first component (10) have aligned holes for receiving a screw which secures the first component (10) to the printed circuit board and connects the grounding terminal (15) to ground via the printed circuit board.

9. A connector according to claim 7 or 8, wherein the terminals (13) of the first component (10) have pins (13b) disposed externally of the casing (11) thereof for connection with the printed circuit tracks.

0228278

# F I G. 1

# F I G. 2

0228278

# F I G. 3

# F I G. 4